(19) Europäisches Patentamt
European Patent Office
Office européen des brevets

(11) **EP 4 492 541 A1**

(12) **EUROPEAN PATENT APPLICATION**
published in accordance with Art. 153(4) EPC

(43) Date of publication:
**15.01.2025 Bulletin 2025/03**

(21) Application number: **23766994.0**

(22) Date of filing: **10.03.2023**

(51) International Patent Classification (IPC):
*H01M 10/658* (2014.01)    *H01M 10/625* (2014.01)

(52) Cooperative Patent Classification (CPC):
**B29C 67/24; B29D 7/01; H01M 10/625;**
**H01M 10/658; H01M 50/204; Y02E 60/10**

(86) International application number:
**PCT/JP2023/009465**

(87) International publication number:
**WO 2023/171818 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.03.2022 JP 2022038555**

(71) Applicant: **IBIDEN CO., LTD.**
**Ogaki-shi, Gifu 503-8604 (JP)**

(72) Inventors:
• **KUMANO Keiji**
  **Ibi-gun, Gifu 501-0695 (JP)**
• **FURUSHIMA Yuho**
  **Ibi-gun, Gifu 501-0695 (JP)**
• **IDO Takahiko**
  **Ibi-gun, Gifu 501-0695 (JP)**

(74) Representative: **Hoffmann Eitle**
**Patent- und Rechtsanwälte PartmbB**
**Arabellastraße 30**
**81925 München (DE)**

(54) **HEAT TRANSFER SUPPRESSION SHEET PRODUCTION METHOD, HEAT TRANSFER SUPPRESSION SHEET, AND BATTERY PACK**

(57)    To provide a method for producing a heat transfer suppression sheet that can provide strength to retain a shape of a heat transfer suppression sheet and that can provide a high inorganic particle retention performance, thereby maintaining an excellent heat insulation performance. The method for producing a heat transfer suppression sheet includes a processing step of processing, by a dry method, a mixture containing an inorganic particle (4) and a binder fiber (3) having a core-sheath structure into a sheet. The binder fiber (3) having a core-sheath structure includes a core portion (1) extending in a longitudinal direction, and a sheath portion (2) formed to cover an outer peripheral surface of the core portion (1). A melting point of a first organic material constituting the core portion (1) is higher than a melting point of a second organic material (7) constituting the sheath portion (2).

*FIG.2*

EP 4 492 541 A1

**Description**

TECHNICAL FIELD

The present invention relates to a heat transfer suppression sheet, a production method therefor, and a battery pack including the heat transfer suppression sheet.

BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

In addition, a lithium ion secondary battery, which has higher capacity and is capable of higher output than a lead-acid battery, a nickel-metal hydride battery, or the like, is mainly used for the battery cells. When a certain battery cell suddenly rises in temperature due to an internal short circuit or overcharging of the battery, and then causes thermal runaway that continues to generate heat, the heat from the battery cell that has experienced thermal runaway may propagate to other adjacent battery cells, thereby causing thermal runaway in other battery cells.

As a method of suppressing the propagation of heat from the battery cell that has experienced thermal runaway as described above, a method of interposing a heat insulation sheet between battery cells is generally used.

For example, Patent Literature 1 discloses a heat insulation sheet for a battery pack, which contains a first particle composed of a silica nanoparticle and a second particle composed of a metal oxide, in which the content of the first particle is limited. In addition, Patent Literature 1 discloses that the heat insulation sheet may contain a binding material composed of at least one kind selected from a fiber, a binder, and a heat-resistant resin.

In addition, the above Patent Literature 1 discloses that dry silica or wet silica can be used as the first particle, and this heat insulation sheet can be produced by a dry molding method or a wet papermaking method.

CITATION LIST

PATENT LITERATURE

Patent Literature 1: JP2021-34278A

SUMMARY OF INVENTION

TECHNICAL PROBLEM

Examples of a binder for producing a heat insulation sheet include a wet heat adhesive binder fiber, and the wet heat adhesive binder fiber needs to be kept in a wet state during production in order to exhibit adhesiveness. Therefore, in the case of using the wet heat adhesive binder fiber, the heat insulation sheet needs to be produced by a wet papermaking method.

However, in order to further improve a heat insulation performance, in the case of using dry silica or silica aerogel having a low thermal conductivity, there is a problem that the heat insulation sheet cannot be produced by a wet papermaking method. This is because when a material containing dry silica is molded into a sheet by a wet papermaking method, the dry silica aggregates with water and the thermal conductivity increases. In general, silica aerogel is difficult to disperse in water, so that when a material containing silica aerogel is molded by a wet papermaking method, it is not possible to obtain a heat insulation sheet in which the material is evenly dispersed, resulting in quality deterioration.

On the other hand, when a heat insulation sheet is produced by a dry molding method using an inorganic particle such as dry silica or silica aerogel, the inorganic particle may fall off (hereinafter also referred to as powder falling) due to a pressure or impact. In particular, in recent battery packs, the capacity of the battery cells has been further improved, so that an expansion rate during charging and discharging has been increased. Therefore, in the case where a heat insulation sheet is disposed between the battery cells of a battery pack, when strength of the entire heat insulation sheet is low, the heat insulation sheet is compressed by the expansion of the battery cells during charging and discharging of the battery cells, and powder falling occurs, resulting in a decrease in heat insulation performance. As a result, when the battery cell experiences thermal runaway and reaches a high temperature, the heat insulation sheet may not be able to exhibit an effect and a thermal chain reaction may occur. Therefore, there is a need for a heat insulation sheet that has high strength to retain a shape, can suppress powder falling, and can maintain an excellent heat insulation property, and a production method therefor.

Although the heat insulation sheet disclosed in the above Patent Literature 1 maintains an excellent heat insulation property even when a compressive stress increases, further improvements in heat insulation property, strength, and performance to suppress powder falling are required.

The present invention has been made in view of the above problems, and an object thereof is to provide a method for producing a heat transfer suppression sheet that can provide strength to retain a shape of a heat transfer suppression sheet even applied with a compressive stress and that can provide a high inorganic particle retention performance, thereby maintaining an excellent heat insulation performance, a heat transfer suppression sheet, and a battery pack including the heat transfer suppression sheet.

SOLUTION TO PROBLEM

The above object of the present invention is achieved by the following configuration [1] relating to a method for producing a heat transfer suppression sheet.

[1] A method for producing a heat transfer suppression sheet including:

a processing step of processing a mixture into a sheet by a dry method, the mixture containing an inorganic particle and a binder fiber having a core-sheath structure, in which
the binder fiber having a core-sheath structure includes a core portion extending in its longitudinal direction, and a sheath portion formed to cover an outer peripheral surface of the core portion, and
a melting point of a first organic material constituting the core portion is higher than a melting point of a second organic material constituting the sheath portion.
Preferred embodiments of the present invention relating to the method for producing a heat transfer suppression sheet relate to the following [2] to [7].

[2] The method for producing a heat transfer suppression sheet according to [1], in which the melting point of the first organic material is 60°C or more higher than the melting point of the second organic material.
[3] The method for producing a heat transfer suppression sheet according to [1] or [2], in which the processing step includes a step of pressurizing the mixture and a step of heating the mixture.
[4] The method for producing a heat transfer suppression sheet according to [3], in which a heating temperature in the step of heating the mixture is a temperature higher than the melting point of the second organic material and lower than the melting point of the first organic material.
[5] The method for producing a heat transfer suppression sheet according to any one of [1] to [4], in which the inorganic particle includes at least one kind of particle selected from a dry silica particle and silica aerogel.
[6] The method for producing a heat transfer suppression sheet according to [5], in which the inorganic particle further includes at least one kind of particle selected from titania, zircon, zirconia, silicon carbide, zinc oxide, and alumina.
[7] The method for producing a heat transfer suppression sheet according to any one of [1] to [6], in which the mixture contains a hot melt powder.
The above object of the present invention is achieved by the following configuration [8] relating to a heat transfer suppression sheet.
[8] A heat transfer suppression sheet including:

an inorganic particle;
an organic fiber constituted of a first organic material; and
a fusion portion covering an outer peripheral surface of the organic fiber, in which
the fusion portion contains a second organic material and the inorganic particle, the second organic material having a melting point lower than a melting point of the first organic material.
Preferred embodiments of the present invention relating to the heat transfer suppression sheet relate to the following [9] to [13].

[9] The heat transfer suppression sheet according to [8], in which the inorganic particle is a particle composed of at least one kind of inorganic material selected from an oxide particle, a carbide particle, a nitride particle, and an inorganic hydrate particle.
[10] The heat transfer suppression sheet according to [9], in which the inorganic particle includes at least one kind of particle selected from a dry silica particle and silica aerogel.
[11] The heat transfer suppression sheet according to [10], in which the inorganic particle further includes at least one kind of particle selected from titania, zircon, zirconia, silicon carbide, zinc oxide, and alumina.
[12] The heat transfer suppression sheet according to any one of [8] to [11], in which the melting point of the second organic material is 60°C or more lower than the melting point of the first organic material.

[13] The heat transfer suppression sheet according to any one of [8] to [12], in which

the first organic material is at least one kind selected from polyethylene terephthalate, a polypropylene, and nylon, and

the second organic material is at least one kind selected from polyethylene terephthalate, a polyethylene, a polypropylene, and nylon.

The above object of the present invention is also achieved by the following configuration [14] relating to a battery pack.

[14] A battery pack including:

a plurality of battery cells; and

the heat transfer suppression sheet according to any one of [8] to [13], in which

the plurality of battery cells is connected in series or in parallel.

ADVANTAGEOUS EFFECTS OF INVENTION

The method for producing a heat transfer suppression sheet according to the present invention includes a processing step of processing a mixture into a sheet by a dry method, the mixture containing an inorganic particle and a binder fiber having a core-sheath structure, and in the binder fiber, the melting point of the organic material constituting the core portion is higher than the melting point of the organic material constituting the sheath portion. Therefore, during production, the core portion can remain to form a framework, and the sheath portion can be melted to fuse the surrounding inorganic particle. Therefore, the inorganic particle can be suppressed from falling off from the heat transfer suppression sheet, and a heat transfer suppression sheet that achieves both excellent strength and heat transfer suppression effect can be obtained. In addition, with the method for producing a heat transfer suppression sheet according to the present invention, since the melting points of the core portion and sheath portion of the binder fiber are different each other, it is easy to control the temperature for melting the sheath portion and remaining the core portion.

The heat transfer suppression sheet according to the present invention contains an inorganic particle having an excellent heat transfer suppression effect, and can thus provide an excellent heat insulation property. In addition, since the heat transfer suppression sheet according to the present invention includes an organic fiber and a fusion portion covering an outer peripheral surface of the organic fiber, and the fusion portion increases an apparent fiber diameter of the organic fiber, the strength of the framework made of the organic fiber can be improved. Therefore, excellent strength can be obtained, thereby making it possible to prevent powder falling and maintain an excellent heat insulation performance.

With the battery pack according to the present invention, since the heat transfer suppression sheet has high strength and an excellent heat insulation performance as described above, thermal runaway of the battery cells in the battery pack and spread of flame to the outside of the battery case can be suppressed.

BRIEF DESCRIPTION OF DRAWINGS

[Fig. 1] Fig. 1 is a schematic diagram showing a state after mixing raw materials, which is part of a method for producing a heat transfer suppression sheet according to a first embodiment of the present invention.

[Fig. 2] Fig. 2 is a schematic diagram showing a structure of a heat transfer suppression sheet produced by the production method according to the first embodiment of the present invention.

[Fig. 3] Fig. 3 is a schematic cross-sectional view showing the structure of the heat transfer suppression sheet produced by the production method according to the first embodiment of the present invention.

[Fig. 4] Fig. 4 is a photograph substituted for a drawing showing an enlarged view of the heat transfer suppression sheet according to the first embodiment of the present invention.

[Fig. 5] Fig. 5 is a schematic diagram showing a structure of a heat transfer suppression sheet produced by a method for producing a heat transfer suppression sheet according to a second embodiment of the present invention.

[Fig. 6] Fig. 6 is a photograph substituted for a drawing showing an enlarged view of the heat transfer suppression sheet according to the second embodiment of the present invention.

[Fig. 7] Fig. 7 is a photograph substituted for a drawing showing a state of particles of wet silica and dry silica.

[Fig. 8] Fig. 8 is a graph showing a change in thermal conductivity of wet silica and dry silica at various temperatures.

[Fig. 9] Fig. 9 is a schematic diagram showing a battery pack according to an embodiment of the present invention.

[Fig. 10] Fig. 10 is a schematic diagram showing a method for measuring a scattering rate.

[Fig. 11] Fig. 11 is a graph showing a change in thermal conductivity in Comparative Example No. 3 and Example No. 1 at various temperatures.

[Fig. 12] Fig. 12 shows a photograph substituted for a drawing showing a surface and a cross section of each of Comparative Example No. 5 and Example No. 1.

[Fig. 13] Fig. 13 is a graph showing a change in scattering rate with the number of hits, where a vertical axis is the scattering rate and a horizontal axis is the number of hits.

DESCRIPTION OF EMBODIMENTS

The inventors of the present invention have conducted intensive studies on a heat transfer suppression sheet that can solve the above problems.

As a result, it is found that when a heat transfer suppression sheet is produced by a dry method using a binder fiber having a core-sheath structure having a core portion with a high melting point and a sheath portion with a low melting point, high strength can be obtained using the core portion as a framework and the sheath portion melts and retains the inorganic particle, thereby suppressing powder falling.

Specifically, in the production of the heat transfer suppression sheet, in the case of heating a sheet material, when a heating temperature is set so as not to melt the core portion, only the sheath portion having a low melting point can be melted. Thereafter, by cooling, the sheath portion is fused to the core portion again while incorporating the surrounding inorganic particle. Therefore, after cooling, the core portion and a fusion portion containing the inorganic particle serve as a framework, and the strength of the heat transfer suppression sheet can be improved. In addition, when the sheath portion is melted and is, together with the inorganic particle, fused to the core portion, the inorganic particle on the surface of the heat transfer suppression sheet is retained on the sheet surface, so that powder falling can be suppressed. As a result, even when a pressure or impact is applied to the heat transfer suppression sheet, a high heat insulation performance can be maintained.

Hereinafter, a method for producing a heat transfer suppression sheet, a heat transfer suppression sheet, and a battery pack according to an embodiment of the present invention will be described in detail. Note that the present invention is not limited to the embodiment described below, and can be freely changed and implemented without departing from the gist of the present invention.

[1. A method for producing a heat transfer suppression sheet]

<First Embodiment>

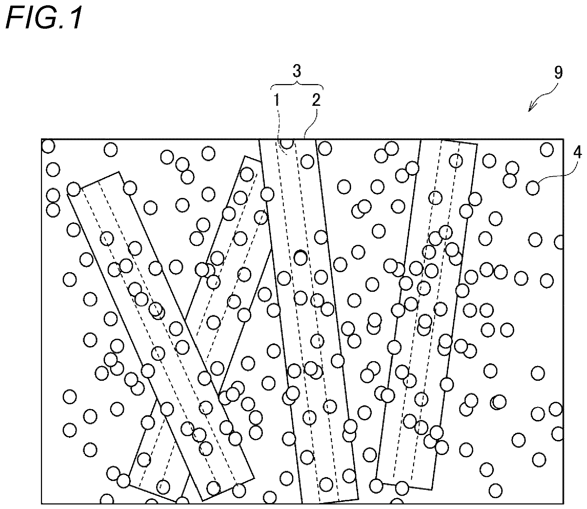

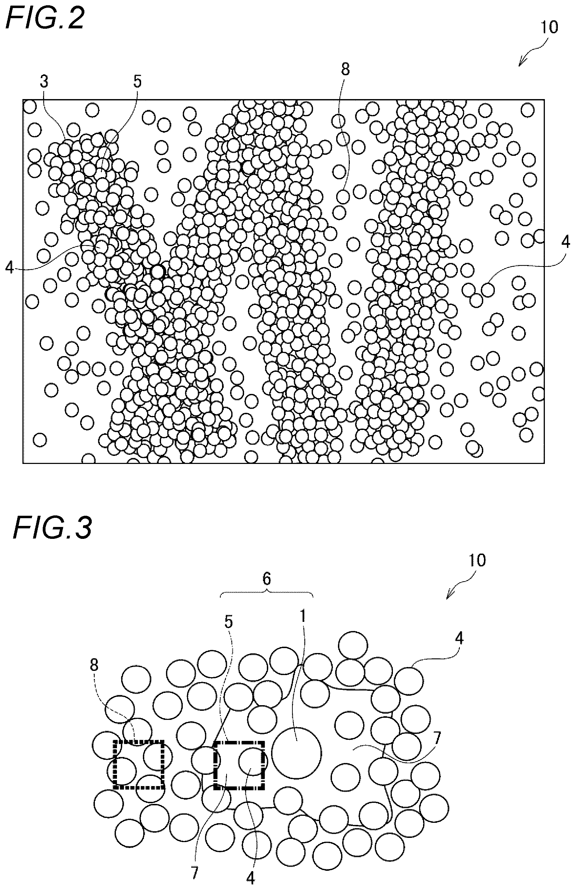

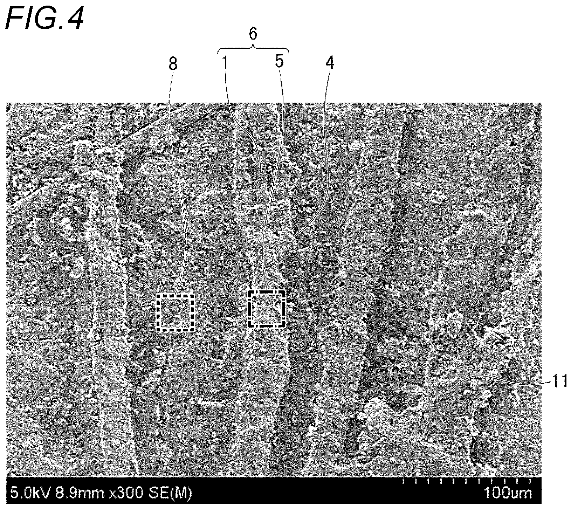

Fig. 1 is a schematic diagram showing a state after mixing raw materials, which is part of a method for producing a heat transfer suppression sheet according to a first embodiment of the present invention. Fig. 2 is a schematic diagram showing a structure of a heat transfer suppression sheet produced by the production method according to the first embodiment of the present invention, and Fig. 3 is a cross-sectional view thereof. Fig. 4 is a photograph substituted for a drawing showing an enlarged view of the heat transfer suppression sheet according to the first embodiment of the present invention.

(Processing Step)

As shown in Fig. 1, first, a binder fiber 3 having a core-sheath structure, and an inorganic particle 4 are charged into a mixer such as a V-type mixer at a predetermined ratio to prepare a mixture 9. In the present embodiment, since a heat transfer suppression sheet is to be produced by a dry method, a solvent such as water, which is necessary for molding by a wet method, is not added to the mixture 9. However, in the present embodiment, during the production of the heat transfer suppression sheet, in order to prevent a powder such as an inorganic particle from flying around and prevent the raw materials from being difficult to handle, a small amount of a solvent such as water may be added within the range of the dry method. For example, by adding a small amount of a solvent such as water to the mixture 9, scattering of the inorganic particle during the production can be further suppressed.

Note that, the binder fiber 3 includes a core portion 1 extending in a longitudinal direction of the fiber, and a sheath portion 2 formed to cover an outer peripheral surface of the core portion 1, the core portion 1 is constituted of a first organic material, and the sheath portion 2 is constituted of a second organic material. In addition, a melting point of the first organic material is higher than a melting point of the second organic material.

Thereafter, the obtained mixture 9 is charged into a predetermined mold and pressurized with a pressing machine or the like, and the obtained molded body (not shown) is heated. At this time, the sheath portion 2 of the binder fiber 3 is melted by heating, and a molten portion (not shown) containing the inorganic particle present around the core portion 1 is formed. Thereafter, as shown in Figs. 2 and 3, the heated mixture is cooled, whereby the molten sheath portion 2 is fused to the core portion 1 again, and a fiber portion 6 including the core portion 1 and a fusion portion 5 is formed, the fusion portion containing a second organic material 7 constituting the sheath portion 2 and the inorganic particle 4. In addition, a base material portion 8 containing the inorganic particle 4 is formed between a plurality of fiber portions 6. Accordingly, a heat transfer suppression sheet 10 processed into a sheet can be obtained.

With the production method according to the present embodiment, since the melting point of the first organic material constituting the core portion 1 is higher than the melting point of the second organic material constituting the sheath portion 2, when heating the mixture 9, the sheath portion 2 can be melted while the core portion 1 remains. Therefore, strength of the heat transfer suppression sheet 10 can be ensured by the core portion 1. In addition, after cooling, the outer peripheral surface of the core portion 1 is covered with the second organic material 7 including the inorganic particle 4, and the fusion portion 5 is formed, so that the inorganic particle 4 can be retained. The obtained fiber portion 6 including the core portion 1 and the fusion portion 5 has a large fiber diameter, and therefore has strength higher than the strength of the core portion 1 alone. Further, in the mixture 9, the binder fibers 3 are present in irregular directions, and the binder fibers 3 may be in contact with each other in some parts. Then, as shown in a contact portion 11 in Fig. 4, when the molten sheath portion 2 is cooled, the adjacent core portions 1 are fused to each other by the fusion portion 5, a three-dimensional framework is formed. As a result, the shape of the entire heat transfer suppression sheet can be retained with even higher strength.

Note that, an adhesive such as a hot melt powder may be contained in the mixture 9 as a raw material for the heat transfer suppression sheet, and details will be described later. By appropriately adjusting the kind and the content of the adhesive contained in the mixture 9, an ability to retain the inorganic particle 4 can be improved and the powder falling can be further suppressed.

Note that, even when an organic fiber without a core-sheath structure is used as the binder fiber, depending on temperature setting, it is possible that only the surface of the binder fiber is melted while the core portion thereof remains, and the inorganic particle is deposited on the surface. However, during the production of the heat transfer suppression sheet, it is common to perform heating from one side or both sides perpendicular to a thickness direction, and since a material having a high heat insulation performance is used, it is difficult to raise the temperature to the same degree on a surface side and on a center side of the sheet in the thickness direction. That is, when the temperature is set to melt only the surface of the organic fiber on the surface side of the sheet, the surface of the organic fiber is not melted on the center side of the sheet, and the ability to retain the inorganic particle 4 decreases. In addition, when the temperature is set to melt the surface of the organic fiber on the center side of the sheet, the organic fiber on the surface side of the sheet melts up to a radial center portion, making it difficult to ensure the strength of the sheet.

In contrast, in the present embodiment, since the melting point of the first organic material constituting the core portion 1 is higher than the melting point of the second organic material constituting the sheath portion 2, the temperature can be set extremely easily to make the core portion 1 remain and to melt the sheath portion 2. Then, the obtained heat transfer suppression sheet has an ideal structure in which the core portion 1 serves as a framework that retains the strength of the sheet on both the surface side and the center side, and the fusion portion 5 containing the inorganic particle 4 is formed on a surface of the core portion 1.

As a result, the heat transfer suppression sheet 10 produced by the production method according to the present embodiment has a strong framework, and even when a pressing force or impact is applied to the heat transfer suppression sheet, the shape can be maintained, the powder falling can be suppressed, and an excellent heat insulation performance can be maintained.

Note that, in order to further suppress the powder falling, the surface of the heat transfer suppression sheet 10 may be covered with a film or the like. Examples of a polymer film include a film made of a polyimide, a polycarbonate, PET, p-phenylene sulfide, a polyetherimide, a cross-linked polyethylene, a flame-retardant chloroprene rubber, polyvinylidene fluoride, rigid vinyl chloride, polybutylene terephthalate, PTFE, PFA, FEP, ETFE, rigid PCV, flame-retardant PET, a polystyrene, a polyethersulfone, a polyamide-imide, a polyacrylonitrile, a polyethylene, a polypropylene, and a polyamide. Note that, the method of covering the surface of the heat transfer suppression sheet 10 with a film is not particularly limited, and examples thereof include a method of performing pasting with an adhesive or the like, a method of wrapping the heat transfer suppression sheet 10 in a film, and a method of housing the heat transfer suppression sheet 10 in a bag-shaped film.

<Second Embodiment>

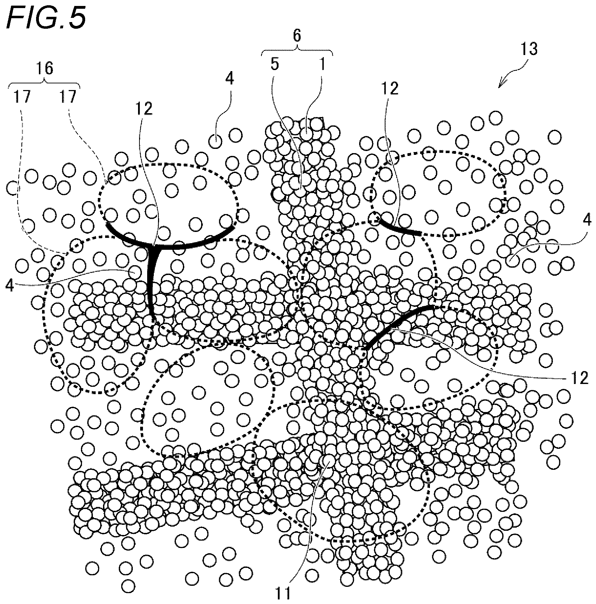

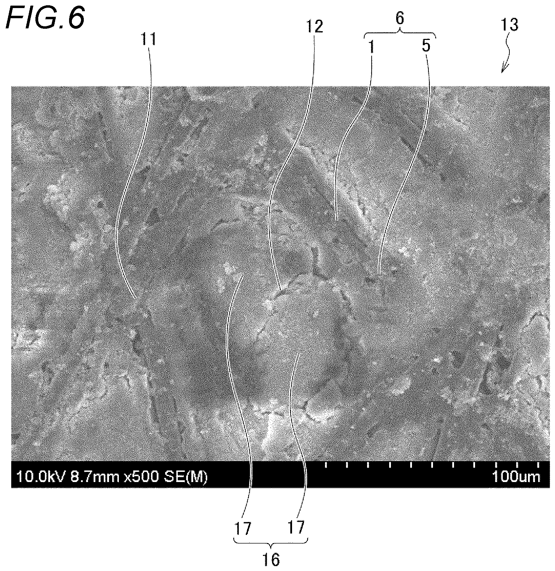

Fig. 5 is a schematic diagram showing a structure of a heat transfer suppression sheet produced by a method for producing a heat transfer suppression sheet according to a second embodiment of the present invention. Fig. 6 is a photograph substituted for a drawing showing an enlarged view of the heat transfer suppression sheet according to the second embodiment of the present invention. Note that, the second embodiment is different from the first embodiment only in materials, and the production process is the same as the method for producing a heat transfer suppression sheet according to the first embodiment. Therefore, In Figs. 5 and 6, the same components as those shown in Figs. 1 to 4 are given the same reference numerals, and the description thereof will be omitted or simplified.

(Processing Step)

As shown in Fig. 1, first, the binder fiber 3 having a core-sheath structure, the inorganic particle 4, and a hot melt powder (not shown) are charged into a mixer such as a V-type mixer at a predetermined ratio to prepare a mixture. The hot melt powder is obtained by shaping a third organic material, for example, ethylene vinyl acetate (EVA) into a powder form. Note that, a melting point of the hot melt powder is lower than the melting point of the first organic material constituting the core portion 1.

Thereafter, the obtained mixture is charged into a predetermined mold and pressurized with a pressing machine or the like, and the obtained molded body is heated. Accordingly, the sheath portion 2 of the binder fiber 3 is melted and the hot melt powder is also melted. Thereafter, the heated mixture is cooled, whereby the molten sheath portion 2 is fused to the core portion 1 again, and the fusion portion 5 containing the second organic material 7 constituting the sheath portion 2 and the inorganic particle 4 is formed. The fusion portion 5 covers at least a part of the surface of the core portion 1 and constitutes the fiber portion 6 together with the core portion 1. In addition, the molten hot melt powder, including the surrounding inorganic particle 4, hardens, and a hardened portion 16 containing the third organic material constituting the hot melt powder and the inorganic particle 4 is formed in various regions between the plurality of fiber portions 6. In this way, a heat transfer suppression sheet 13 according to the second embodiment can be obtained.

Note that, as described above, when the hot melt powder is added as a material for the heat transfer suppression sheet, the hot melt powder melted by heating is likely to segregate on a surface of the molded body. Therefore, a thin hardened layer 17 is formed on a surface of the heat transfer suppression sheet 13. Note that, the hardened portion 16 includes thin hardened layers 17 dispersed in a plurality of regions, and a crack 12 may be formed between the plurality of hardened layers 17.

With the production method according to the second embodiment, the melting point of the first organic material constituting the core portion 1 is higher than the melting point of the second organic material constituting the sheath portion 2 and the melting point of the third organic material constituting the hot melt powder, so that when heating the mixture 9, the sheath portion 2 and the hot melt powder can be melted while the core portion 1 remains. Therefore, strength of the heat transfer suppression sheet 13 can be ensured by the core portion 1.

By cooling, the sheath portion 2, including the surrounding inorganic particle 4, is fused to the core portion 1 again to form the fusion portion 5, and the hot melt powder, including the surrounding inorganic particle 4, hardens to form the hardened portion 16. Therefore, the inorganic particle 4 can not only be retained by the fusion portion 5, but also be retained by the hardened portion 16 in a region excluding the fusion portion 5. In particular, as described above, the hot melt powder melted by heating is likely to segregate on the surface of the molded body, and the surface of the heat transfer suppression sheet 13 is in a state of being covered with the thin hardened layers 17, so that falling off of the inorganic particle 4 can be further suppressed.

Further, in the present embodiment, when the crack 12 is formed between the thin hardened layers 17 dispersed in a plurality of regions, in the case where the heat transfer suppression sheet 13 is disposed between a plurality of battery cells, the heat transfer suppression sheet 13 is likely to deform as the battery cells expand and contract during charging and discharging. Therefore, damages to the heat transfer suppression sheet 13 can be suppressed, and the load on adjacent battery cells can also be reduced.

Further, since the hardened portion 16 containing the hot melt powder and the inorganic particle 4 between frameworks formed by the fiber portions 6 supports the frameworks, the shape of the entire heat transfer suppression sheet can be retained with even higher strength, and as a result, even when a pressure or impact is applied to the heat transfer suppression sheet, a high heat insulation performance can be maintained.

Note that, in the second embodiment, in order to further suppress the powder falling, the surface of the heat transfer suppression sheet 13 may also be covered with a film or the like. The kind of the film and the method of covering with the film are as described above.

Next, the binder fiber and heating conditions used in the method for producing a heat transfer suppression sheet according to the present embodiment will be described.

<Binder Fiber>

The binder fiber 3 that can be used in the present embodiment is not particularly limited as long as it has a core-sheath structure and the melting point of the first organic material constituting the core portion 1 is higher than the melting point of the second organic material constituting the sheath portion 2. As the first organic material constituting the core portion 1, at least one kind selected from polyethylene terephthalate, a polypropylene, and nylon can be selected. In addition, as the second organic material constituting the sheath portion 2, at least one kind selected from polyethylene terephthalate, a polyethylene, a polypropylene, and nylon can be selected.

When the melting point of the first organic material constituting the core portion 1 is sufficiently higher than the melting point of the second organic material constituting the sheath portion 2, a setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the second organic material.

Note that, the binder fiber having a core-sheath structure as described above is generally commercially available, and the materials constituting the core portion and the sheath portion may be the same as or different from each other. Examples of the binder fiber in which the core portion 1 and the sheath portion 2 are constituted of the same material having different melting points include one in which the core portion 1 and the sheath portion 2 are constituted of polyethylene terephthalate, one in which the core portion 1 and the sheath portion 2 are constituted of a polypropylene, and one in which the core portion 1 and the sheath portion 2 are constituted of nylon. Examples of the binder fiber in which the core portion 1 and the sheath portion 2 are constituted of different materials include one in which the core portion 1 is constituted of polyethylene terephthalate and the sheath portion 2 is constituted of a polyethylene, and one in which the core portion 1 is constituted of a polypropylene and the sheath portion 2 is constituted of a polyethylene.

In the present embodiment, the melting point of the second organic material constituting the sheath portion of the binder fiber refers to a melting temperature at which the second organic material begins to undergo melting deformation, and softening accompanied by a change in shape is also considered to be a kind of melting deformation. The melting point of the sheath portion of the binder fiber can be measured, for example, by the following method.

A binder fiber to be measured is disposed in contact with a glass fiber having a higher melting point, heated from room temperature to, for example, 200°C at a heating rate of 5°C/min, and thereafter cooled to room temperature. At this time, when the surface of the binder fiber undergoes melting deformation and is fused at a portion in contact with the glass fiber, or a cross-sectional shape of the binder fiber changes, it can be determined that the melting point of the second organic material constituting the sheath portion is 200°C or lower In the present embodiment, when the heating temperature is changed variously, and the fusion state of the binder fiber and the glass fiber after cooling by the above method or the cross-sectional shape of the binder fiber is observed, the melting point of the second organic material constituting the sheath portion can be determined.

(Content of Binder Fiber)

In the present embodiment, when a content of the binder fiber 3 in the mixture 9 is appropriately controlled, a sufficient framework reinforcement effect can be obtained in the obtained heat transfer suppression sheet 10.

The content of the binder fiber 3 is preferably 5 mass% or more, and more preferably 10 mass% or more, with respect to a total mass of the mixture 9. When the content of the binder fiber 3 is too large, the content of the inorganic particle 4 decreases relatively. Therefore, in order to obtain a desired heat insulation performance, the content of the binder fiber 3 is preferably 25 mass% or less, and more preferably 20 mass% or less, with respect to the total mass of the mixture 9.

<Inorganic Particle>

The kind of the inorganic particle 4 that can be used in the present embodiment will be described later.

(Content of Inorganic Particle)

In the present embodiment, when a content of the inorganic particle 4 in the mixture 9 is appropriately controlled, a sufficient heat insulation property can be ensured in the obtained heat transfer suppression sheet 10.

The content of all inorganic particles 4 contained in the mixture 9 is preferably 60 mass% or more, and more preferably 70 mass% or more, with respect to the total mass of the mixture 9. When the content of the inorganic particle 4 is too large, the content of the binder fiber 3 decreases relatively. Therefore, in order to obtain a sufficient framework reinforcement effect, the content of the inorganic particle 4 is preferably 95 mass% or less, and more preferably 90 mass% or less, with respect to the total mass of the mixture 9.

<Hot Melt Powder>

In the present embodiment, in addition to the binder fiber 3 and the inorganic particle 4, the mixture 9 may contain a hot melt powder (not shown). The hot melt powder is a powder that contains, for example, a third organic material different from the first organic material and the second organic material, and has a property of being melted by heating. By containing the hot melt powder in the mixture 9 and heating the same, when the hot melt powder is cooled after melting, the hot melt powder, including the surrounding inorganic particle 4, hardens, and the hardened portion 16 is formed. As described above, the hardened portion 16 includes the thin hardened layers 17 dispersed in a plurality of regions on the surface of the heat transfer suppression sheet 13, and the surface of the heat transfer suppression sheet 13 is covered with the thin hardened layers, so that falling off of the inorganic particle 4 from the heat transfer suppression sheet 13 can be further suppressed.

Examples of the hot melt powder include those having various melting points, and it is sufficient to select a hot melt powder having an appropriate melting point in consideration of the melting points of the core portion 1 and the sheath portion 2 of the binder fiber 3 used. For example, when the melting point of the hot melt powder is lower than the melting point of the core portion 1, the heating temperature can be set to melt the sheath portion 2 and the hot melt powder while the core portion 1 remains. Further, when the melting point of the hot melt powder is equal to or lower than the melting point of the sheath portion 2, it is sufficient to set the heating temperature during the production between the melting point of the core portion 1 and the melting point of the sheath portion 2, so that the heating temperature can be set much more easily.

On the other hand, the kind of the hot melt powder to be used can also be selected such that the melting point of the hot melt powder is between the melting point of the core portion 1 and the melting point of the sheath portion 2. In the case of using the hot melt powder having such a melting point, when both the sheath portion 2 and the hot melt powder are cooled and harden after melting, the hot melt powder present in various regions excluding the organic fiber (core portion 1) and the surrounding molten sheath portion 2 firstly hardens. As a result, the position of the organic fiber can be fixed, and thereafter the molten sheath portion 2 is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion 1, the setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, examples of the component constituting the hot melt powder include a polyethylene, a polyester, a polyamide, and ethylene vinyl acetate.

(Content of Hot Melt Powder)

When the hot melt powder is contained in the mixture 9 in order to suppress the falling off of the inorganic particle, the effect of suppressing powder falling can be obtained even when the content is very small. Therefore, the content of the hot melt powder is preferably 0.5 mass% or more, and more preferably 1 mass% or more, with respect to the total mass of the mixture 9.

On the other hand, when the content of the hot melt powder is increased, the content of the inorganic particle 4 decreases relatively. Therefore, in order to obtain a desired heat insulation performance, the content of the hot melt powder is preferably 5 mass% or less, and more preferably 4 mass% or less, with respect to the total mass of the mixture 9.

<Heating Conditions>

The step of processing the mixture 9 into a sheet includes a step of pressurizing the mixture 9 and a step of heating the mixture 9. The heating temperature in the heating step is preferably a temperature higher than the melting point of the second organic material constituting the sheath portion 2 and lower than the melting point of the first organic material constituting the core portion 1. By setting the heating temperature like this, as described above, the strength of the sheet can be ensured by the core portion 1 both on the surface side and the center side of the sheet, and the inorganic particle 4 can be retained by the fusion portion 5.

Note that, when the melting point of the first organic material constituting the core portion 1 is sufficiently higher than the melting point of the second organic material constituting the sheath portion 2, the setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the second organic material.

In addition, the heating temperature in the heating step is preferably set 10°C or more higher, and more preferably 20°C or more higher than the melting point of the second organic material constituting the sheath portion 2. On the other hand, the heating temperature is preferably set 10°C or more lower, and more preferably 20°C or more lower than the melting point of the first organic fiber constituting the core portion 1.

A heating time is not particularly limited, and it is preferable to set a heating time that allows the sheath portion 2 to be sufficiently melted. For example, it can be set to 3 minutes or longer and 15 minutes or shorter.

As shown in the above second embodiment, when the hot melt powder is contained as a material for the heat transfer suppression sheet, the heating temperature in the heating step is preferably set 10°C or more higher, and more preferably 20°C or more higher than the higher one of the melting points of the second organic material constituting the sheath portion 2 and the third organic material constituting the hot melt powder.

On the other hand, the heating temperature is preferably set 10°C or more lower, and more preferably 20°C or more lower than the melting point of the first organic material constituting the core portion 1. By setting the heating temperature like this, as described above, the strength of the sheet can be further improved by the framework constituted by the fiber portion 6 and the hardened portion 16, and the inorganic particle 4 can be prevented from falling off by the fusion portion 5 and the hardened layers 17.

[2. Heat Transfer Suppression Sheet]

(First Embodiment)

Hereinafter, a first embodiment of a heat transfer suppression sheet produced by the method for producing a heat transfer suppression sheet according to the first embodiment will be described.

As shown in Figs. 2 to 4, the heat transfer suppression sheet according to the present embodiment includes the inorganic particle 4, an organic fiber (core portion 1) constituted of the first organic material, and the fusion portion 5 covering an outer peripheral surface of the organic fiber. As described above, the fusion portion 5 contains the second organic material 7 having a melting point lower than the melting point of the first organic material, and the inorganic particle 4.

In the heat transfer suppression sheet 10 according to the present embodiment configured in this manner, as described in the above [1. A method for producing a heat transfer suppression sheet], the organic fiber (core portion 1) and the fusion portion 5 serve as a framework, so that excellent strength and shape retention property can be obtained. In addition, since the fusion portion 5 covering the outer peripheral surface of the organic fiber fixes the inorganic particle 4 to the organic fiber (core portion 1) on both the surface side and the center side of the heat transfer suppression sheet 10, the powder falling can be suppressed. Therefore, for example, even when the heat transfer suppression sheet 10 according to the present embodiment is disposed between a plurality of battery cells to be described later, and the battery cells expand to apply a compressive stress or impact to the heat transfer suppression sheet 10, an excellent heat insulation performance can be maintained.

In the present embodiment, a mechanism with which falling off of the inorganic particle 4 from the surface of the sheet (powder falling) can be suppressed is unclear, and one of reasons is thought to be that the organic fiber (core portion 1) and the fusion portion 5 form a three-dimensional and strong framework, and the shape of the heat transfer suppression sheet 10 is retained, so that deformation or compression of the heat transfer suppression sheet 10 is suppressed. In addition, the reason why the inorganic particle 4 is retained is also thought to be that the fiber portion 6 including the fusion portion 5 and the organic fiber (core portion 1) exposed on the sheet surface can absorb an impact applied to the heat transfer suppression sheet 10.

Note that, as shown in Fig. 4, in the heat transfer suppression sheet 10, the fusion portion 5 does not need to completely cover the outer peripheral surface of the organic fiber (core portion 1), and the organic fiber (core portion 1) may be partially exposed. In the method for producing a heat transfer suppression sheet according to the present embodiment, since the binder fiber 3 having a core-sheath structure is used, the sheath portion 2 may peel off during the production process, and even when the organic fiber (core portion 1) is partially exposed, the effects of the present invention can be sufficiently obtained.

(Second Embodiment)

Hereinafter, a second embodiment of a heat transfer suppression sheet produced by the method for producing a heat transfer suppression sheet according to the second embodiment will be described. As shown in Figs. 5 and 6, in the heat transfer suppression sheet 13, the sheath portion of the binder fiber having a core-sheath structure is fused to the core portion 1 again, similar to the example of the heat transfer suppression sheet according to the first embodiment shown in Fig. 4. Specifically, the fiber portion 6 includes the core portion 1 and the fusion portion 5 containing the second organic material constituting the sheath portion and the inorganic particle 4. In addition, adjacent core portions 1 are fused to each other by the fusion portion 5 to form the contact portion 11. Further, the hardened portion 16 containing the third organic material constituting the hot melt powder and the inorganic particle is formed in a region excluding the plurality of fiber portions 6. Further, the hardened portion 16 has the plurality of hardened layers 17 on the surface of the heat transfer suppression sheet 13, and the crack 12 is formed between the plurality of hardened layers 17.

Note that, when a material mixture contains a hot melt powder, this hot melt powder is present in various regions of a molded body, so that when cooling is performed after heating in the production process, the fusion portion 5 may contain the third organic material that is a component of the hot melt powder. Similarly, in the vicinity of the organic fiber, the hardened portion 16 may contain the second organic material that is a component of the sheath portion 2. In either case, the effects of the present invention are not influenced.

In the heat transfer suppression sheet 13 according to the second embodiment configured in this manner, similar to the above first embodiment, the hardened portion 16 containing the hot melt powder and the inorganic particle 4 between frameworks supports the frameworks, so that the shape of the entire heat transfer suppression sheet can be retained with even higher strength. In addition, since the outer peripheral surface of the organic fiber is covered with the fusion portion 5, and the hardened portion 16 is formed even in the region excluding the fusion portion 5, the inorganic particle 4 can be retained.

Further, since the thin hardened layers 17 are formed on the surface of the heat transfer suppression sheet 13, a high powder falling suppression effect can be obtained. Further, when the crack 12 is formed, the heat transfer suppression sheet 13 easily follows deformation as the battery cells expand and contract during charging and discharging.

Therefore, for example, even when the heat transfer suppression sheet 13 according to the present embodiment is disposed between a plurality of battery cells to be described later, and the battery cells expand to apply a compressive stress or impact to the heat transfer suppression sheet 13, an excellent heat insulation performance can be maintained.

Hereinafter, the materials constituting the heat transfer suppression sheet according to the present embodiment will be described in detail.

<Organic Fiber>

In the heat transfer suppression sheet 10, the core portion 1 constituted of the first organic material serves as an organic fiber that retains the strength and the shape of the sheet. The first organic material constituting the organic fiber is not particularly limited as long as it has a melting point higher than the second organic material present on the outer peripheral surface of the organic fiber. Examples of the first organic material include at least one kind selected from polyethylene terephthalate, a polypropylene, and nylon.

(Content of Organic Fiber)

In the present embodiment, when a content of the organic fiber in the heat transfer suppression sheet 10 is appropriately controlled, a sufficient framework reinforcement effect can be obtained.

The content of the organic fiber is preferably 2 mass% or more, and more preferably 4 mass% or more, with respect to a total mass of the heat transfer suppression sheet 10. When the content of the organic fiber is too large, the content of the inorganic particle 4 decreases relatively. Therefore, in order to obtain a desired heat insulation performance, the content of the organic fiber is preferably 10 mass% or less, and more preferably 8 mass% or less, with respect to the total mass of the heat transfer suppression sheet 10.

(Fiber Length of Organic Fiber)

A fiber length of the organic fiber is not particularly limited, and from the viewpoint of ensuring moldability and processability, an average fiber length of the organic fiber is preferably 10 mm or less.

On the other hand, from the viewpoint of making the organic fiber function as a framework and ensuring compressive strength of the heat transfer suppression sheet, the average fiber length of the organic fiber is preferably 0.5 mm or more.

<Fusion Portion>

The fusion portion 5 is formed by once melting the sheath portion 2 of the binder fiber 3 having a core-sheath structure by heating and then performing cooling, and contains the second organic material 7 and the inorganic particle 4.

(Second Organic Material)

The second organic material is not particularly limited as long as it has a melting point lower than the first organic material constituting the organic fiber. Examples of the second organic material include at least one kind selected from polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

<Hardened Portion>

When a hot melt powder is contained as a material for the heat transfer suppression sheet, the produced heat transfer suppression sheet includes the hardened portion 16. The hardened portion 16 is formed by once melting the hot melt powder by heating and then performing cooling, and contains the third organic material constituting the hot melt powder and the inorganic particle 4.

(Third Organic Material)

As described above, the third organic material, which is a component constituting the hot melt powder, is not particularly limited as long as it has a melting point lower than the first organic material constituting the organic fiber. In order to easily control the heating temperature during the production, the melting point of the hot melt powder (third organic material) is preferably equal to or lower than the melting point of the second organic material constituting the sheath portion. However, in order to form a more three-dimensional framework and improve the strength of the heat transfer suppression sheet, the melting point of the third organic material may be between the melting point of the first organic material and the melting point of the second organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower In addition, it is preferable that the third organic material constituting the hot melt powder is at least one kind selected from a polyethylene, a polyester, a polyamide, and ethylene vinyl acetate.

(Inorganic Particle)

As the inorganic particle, a single kind of inorganic particle may be used, or two or more kinds of inorganic particles may be used in combination. From the viewpoint of the heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 $\mu$m or more, the inorganic particle is easily available and an increase in production cost can be suppressed. When the average secondary particle diameter is 200 $\mu$m or less, a desired heat insulation effect can be obtained. Therefore, the average secondary particle diameter of the inorganic particle is preferably 0.01 $\mu$m or more and 200 $\mu$m or less, and more preferably 0.05 $\mu$m or more and 100 $\mu$m or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with a small-diameter inorganic particle as a first inorganic particle and a large-diameter inorganic particle as a second inorganic particle.

<First Inorganic Particle>

(Oxide Particle)

An oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

(Average primary particle diameter of oxide particle: 0.001 $\mu$m or more and 50 $\mu$m or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 $\mu$m or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 $\mu$m or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

(Nanoparticle)

In the present invention, the nanoparticle refers to a nanometer-order particle having a spherical or nearly spherical shape and having an average primary particle diameter of less than 1 $\mu$m. The nanoparticle has a low density and thus suppresses the conductive heat transfer, and when the nanoparticle is used as the first inorganic particle, voids are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when the nanoparticle having a small average primary particle diameter is used as the oxide particle, even when the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine voids between particles due to a repulsive force caused by static electricity, and the bulk density thereof is low, so that the particle is used for filling so as to provide a cushioning property.

Note that, in the present invention, when the nanoparticle is used as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm$^3$), for example, even when battery cells disposed on both sides of the heat insulation sheet thermally expand and a large compressive stress is applied to the heat insulation sheet, the size (area) or the number of contact points between the silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

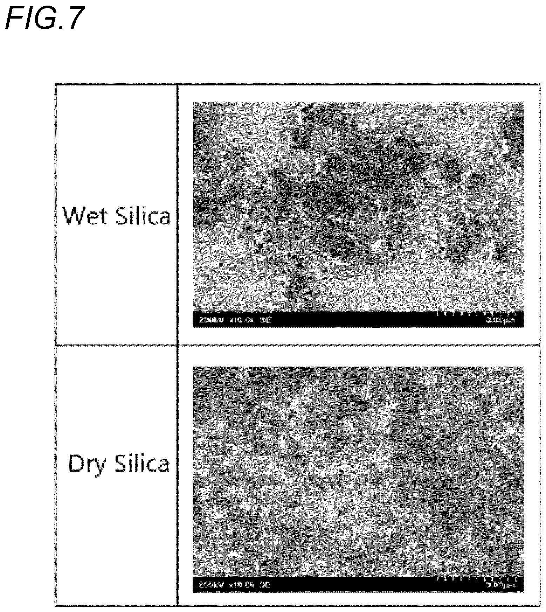

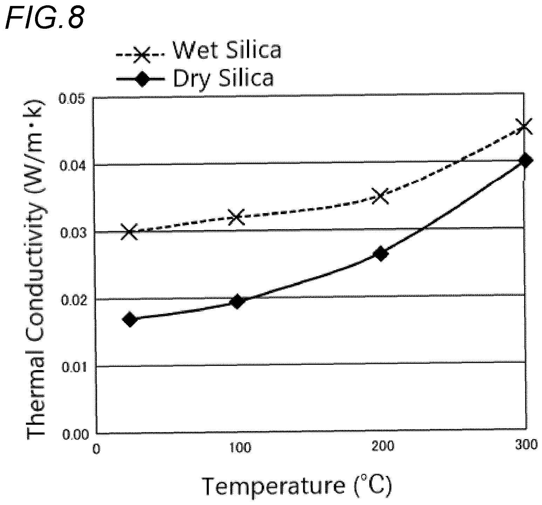

Fig. 7 is a photograph substituted for a drawing showing a state of particles of wet silica and dry silica. Fig. 8 is a graph showing a change in thermal conductivity of wet silica and dry silica at various temperatures. As shown in Fig. 7, the particles of wet silica are agglomerated, whereas the particles of dry silica can be dispersed. Since the conductive heat transfer is dominant in heat conduction in a temperature range of 300°C or lower, as shown in Fig. 8, the dry silica in which particles can be dispersed can provide a more excellent heat insulation performance than the wet silica.

Note that, in the method for producing a heat transfer suppression sheet according to the present embodiment, a mixture containing materials is processed into a sheet by a dry method. Therefore, as the inorganic particle, it is preferable to use dry silica or silica aerogel which has a low thermal conductivity.

(Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property of the heat transfer suppression sheet can be maintained.

Note that the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

(Inorganic Hydrate Particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, as will be described later, the heat transfer suppression sheet 10 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

(Average secondary particle diameter of inorganic hydrate particle: 0.01 $\mu$m or more and 200 $\mu$m or less)

In the case where the inorganic hydrate particle is used as the first inorganic particle, when the average particle diameter thereof is too large, it takes a certain amount of time for the first inorganic particle (inorganic hydrate) near the center of the heat transfer suppression sheet 10 to reach the thermal decomposition temperature thereof, so that the first inorganic particle near the center of the sheet may not be completely thermally decomposed. Therefore, the average secondary particle diameter of the inorganic hydrate particle is preferably 0.01 $\mu$m or more and 200 $\mu$m or less, and more preferably 0.05 $\mu$m or more and 100 $\mu$m or less.

(Particle Composed of Thermally Expandable Inorganic Material)

Examples of the thermally expandable inorganic material include vermiculite, bentonite, mica, and perlite.

(Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

(Inorganic Balloon)

The heat insulation material used in the present invention may contain an inorganic balloon as the first inorganic particle.

When the inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a perlite balloon, and a glass balloon can be used.

(Content of inorganic balloon: 60 mass% or less with respect to total mass of heat insulation material)

The content of the inorganic balloon is preferably 60 mass% or less with respect to the total mass of the heat insulation material.

(Average particle diameter of inorganic balloon: 1 μm or more and 100 μm or less)

The average particle diameter of the inorganic balloon is preferably 1 μm or more and 100 μm or less.

<Second Inorganic Particle>

When the heat transfer suppression sheet contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that the nanoparticle has extremely low conductive heat transfer, and can maintain an excellent heat insulation property even when a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, for example, when the nanoparticle is used as the first inorganic particle, it is preferable that the heat transfer suppression sheet further contains a particle composed of a metal oxide having a diameter larger than that of the first inorganic particle as the second inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

When at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 300°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 300°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

(Average Primary Particle Diameter of Second Inorganic Particle)

In the case where the second inorganic particle composed of a metal oxide is contained in the heat transfer suppression sheet, when the average primary particle diameter of the second inorganic particle is 1 μm or more and 50 μm or less, the radiant heat transfer can be efficiently suppressed in a high temperature range of 500°C or higher. The average primary particle diameter of the second inorganic particle is more preferably 5 μm or more and 30 μm or less, and most preferably 10 μm or less.

(Content of Inorganic Particle)

In the present embodiment, when a content of the inorganic particle 4 in the heat transfer suppression sheet 10 is appropriately controlled, a sufficient heat insulation property can be ensured in the heat transfer suppression sheet 10.

The content of the inorganic particle 4 is preferably 60 mass% or more, and more preferably 70 mass% or more, with respect to the total mass of the heat transfer suppression sheet 10. When the content of the inorganic particle 4 is too large, the contents of the organic fiber and the fusion portion decrease relatively. Therefore, in order to obtain a sufficient framework reinforcement effect and inorganic particle retention effect, the content of the inorganic particle 4 is preferably 95 mass% or less, and more preferably 90 mass% or less, with respect to the total mass of the heat transfer suppression sheet 10.

Note that, the content of the inorganic particle in the heat transfer suppression sheet 10 can be calculated, for example, by heating the heat transfer suppression sheet at 800°C, decomposing organic components, and then measuring the mass of the remaining portion.

In addition, the heat transfer suppression sheet according to the present embodiment may contain an organic fiber constituted of an organic material different from the first organic material, or an inorganic fiber, in addition to the organic fiber, the fusion portion 5, and the inorganic particle 4. In addition, the base material portion 8 may contain an organic material different from the first organic material and the second organic material, and the inorganic particle may be retained in this organic material.

<Thickness of Heat Transfer Suppression Sheet>

A thickness of the heat transfer suppression sheet according to the present embodiment is not particularly limited, and is preferably 0.05 mm or more and 10 mm or less. When the thickness is 0.05 mm or more, sufficient compressive strength can be obtained. On the other hand, when the thickness is 10 mm or less, a good heat insulation property of the heat transfer suppression sheet can be obtained.

[3. Battery Pack]

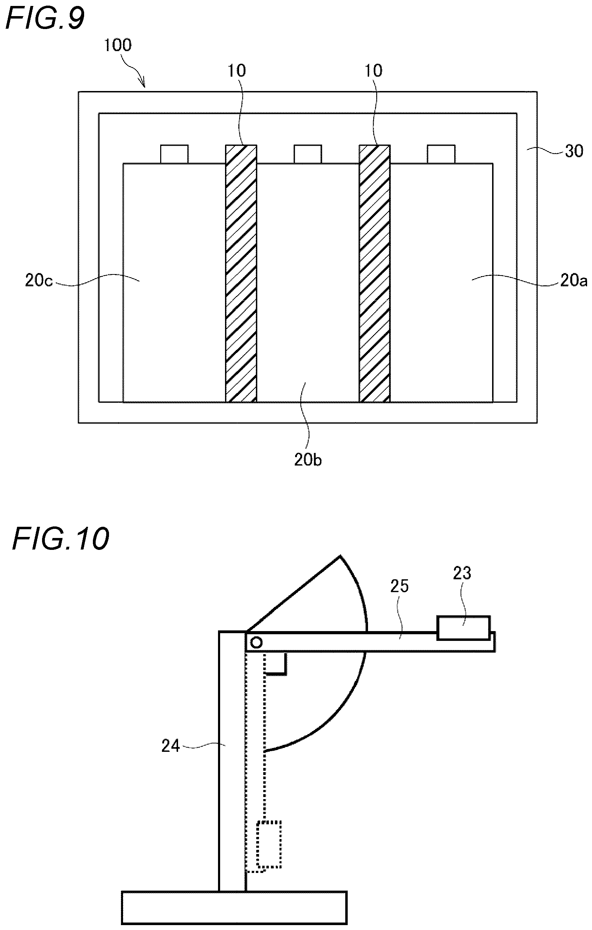

Fig. 9 is a schematic diagram showing a battery pack according to an embodiment of the present invention. A battery pack 100 according to the present embodiment includes a plurality of battery cells 20a, 20b, and 20c, and the heat transfer suppression sheet according to the present embodiment, and the plurality of battery cells are connected in series or in parallel.

For example, as shown in Fig. 9, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are housed in a battery case 30.

Note that, the heat transfer suppression sheet 10 is as described above.

In the battery pack 100 configured in this manner, even when a certain battery cell 20a has a high temperature, since the heat transfer suppression sheet 10 having a heat transfer suppression effect is present between the battery cell 20a and the battery cell 20b, it is possible to suppress the propagation of heat to the battery cell 20b.

In addition, since the heat transfer suppression sheet 10 according to the present embodiment has high compressive strength, thermal expansion of the battery cells 20a, 20b, and 20c can also be suppressed during charging and discharging of the battery cells. Therefore, a distance between the battery cells can be ensured, an excellent heat insulation performance can be maintained, and the thermal runaway of the battery cells can be prevented. In addition, since it has the effect of suppressing powder falling, it can be easily handled.

Note that the battery pack 100 according to the present embodiment is not limited to the battery pack shown in Fig. 9, and the heat transfer suppression sheet 10 can be disposed not only between the battery cell 20a and the battery cell 20b or between the battery cell 20b and the battery cell 20c, but also between the battery cells 20a, 20b, and 20c and the battery case 30.

In the battery pack 100 configured in this manner, when a certain battery cell ignites, it is possible to suppress the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cells 20a, 20b, and 20c and the battery case 30, it is not necessary to newly prepare a flame retardant material or the like, and a safe battery pack 100 can be easily formed at a low cost.

In the battery pack according to the present embodiment, the heat transfer suppression sheet 10 disposed between the battery cells 20a, 20b, and 20c and the battery case 30 may be in contact with the battery cell or may have a gap therebetween. However, in the case where there is a gap between the heat transfer suppression sheet 10 and the battery cells 20a, 20b, and 20c, even when the temperature of any one battery cell of the plurality of battery cells rises and the volume expands, the deformation of the battery cell is allowable.

Note that, the heat transfer suppression sheet 10 according to the present embodiment can be produced into various shapes depending on the production method. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Examples

Hereinafter, the present invention will be described in detail with reference to Examples and Comparative Examples, but the present invention is not limited thereto.

[Test 1]

Test materials for heat transfer suppression sheets were prepared using various materials by a dry method or a wet method, and the heat insulation performance and the powder falling suppression performance (scattering rate) were evaluated.

<Preparation of Test Material>

(Example No. 1)

As the inorganic particle, dry silica and titania were prepared, and a binder fiber having a core-sheath structure was prepared. The specific content and name of each component are shown below.

·Inorganic particle: dry silica (60 mass%, average primary particle diameter: 0.012 $\mu$m)
·Inorganic particle: titania (25 mass%, average primary particle diameter: 8 $\mu$m)
·Binder fiber (15 mass%, average fiber length: 5 mm)
Core portion: polyethylene terephthalate (melting point: 240°C)
Sheath portion: low melting point polyethylene terephthalate (melting point: 110°C)

The above materials were charged into a mixer to prepare a mixture. Thereafter, the obtained mixture was charged into a predetermined mold, pressurized with a pressing machine or the like, heated, and cooled. Then, a test material in Example No. 1 having a basis weight of 740 (g/m$^2$) and a thickness of 2 mm was obtained. Note that, the heating conditions were 150°C for 15 minutes. The content of the organic fiber (core portion) in the obtained test material was 7 mass% with respect to a total mass of the test material.

(Comparative Example No. 1)

As the inorganic particle, dry silica and titania were prepared, and a single-component binder fiber was prepared. The specific content and name of each component are shown below.

·Inorganic particle: dry silica (60 mass%, average primary particle diameter: 0.012 $\mu$m)
·Inorganic particle: titania (25 mass%, average primary particle diameter: 8 $\mu$m)
·Binder fiber: low melting point polyethylene terephthalate (15 mass%, melting point: 130°C, average fiber length: 5 mm)

Thereafter, a test material in Comparative Example No. 1 having a basis weight of 740 (g/m$^2$) and a thickness of 2 mm was prepared by a dry method which is the same way as Example No. 1. Note that, the heating conditions were 160°C for 15 minutes.

(Comparative Example No. 2)

As the inorganic particle, wet silica and titania were prepared, and a single-component binder fiber was prepared. The specific content and name of each component are shown below.

·Inorganic particle: wet silica (60 mass%, average primary particle diameter: 0.014 $\mu$m)
·Inorganic particle: titania (25 mass%, average primary particle diameter: 8 $\mu$m)
·Binder fiber: low melting point polyethylene terephthalate (15 mass%, melting point: 130°C, average fiber length: 5 mm)

Thereafter, a test material in Comparative Example No. 2 having a basis weight of 740 (g/m$^2$) and a thickness of 2 mm was prepared by a dry method which is the same way as Example No. 1. Note that, the heating conditions were 160°C for 15 minutes.

(Comparative Example No. 3)

As the inorganic particle, wet silica and titania were prepared, and a single-component binder fiber was prepared.

The specific content and name of each component are shown below.

·Inorganic particle: wet silica (60 mass%, average primary particle diameter: 0.014 µm)
·Inorganic particle: titania (25 mass%, average primary particle diameter: 8 µm)
·Binder fiber: low melting point polyethylene terephthalate (15 mass%, melting point: 130°C, average fiber length: 5 mm)

The above materials were dispersed in water using a pulper to prepare a uniform papermaking slurry (dispersion liquid), and then dehydrated using a papermaking machine to obtain a wet sheet. Thereafter, the wet sheet was dried using a Yankee dryer with a surface temperature of 140°C, and then heated to 250°C by hot air drying to obtain a dry sheet. Thereafter, the dry sheet was cooled, and then a test material of Comparative Example No. 3 having a basis weight of 740 (g/m$^2$) and a thickness of 2 mm was obtained.

(Comparative Example No. 4)

As the inorganic particle, dry silica and titania which is the same as Example No. 1 were prepared, and a binder fiber having a core-sheath structure was prepared. The specific content and name of each component are shown below.

·Inorganic particle: dry silica (60 mass%, average primary particle diameter: 0.012 µm)
·Inorganic particle: titania (25 mass%, average primary particle diameter: 8 µm)
·Binder fiber (15 mass%, average fiber length: 5 mm)
Core portion: polyethylene terephthalate (melting point: 240°C)
Sheath portion: low melting point polyethylene terephthalate (melting point: 110°C)

Thereafter, a test material in Comparative Example No. 4 having a basis weight of 740 (g/m$^2$) and a thickness of 2 mm was prepared by a wet method which is the same way as Comparative Example No. 3. Note that, the heating conditions were the same as in Comparative Example No. 3.

<Evaluation on Test Material>

For each test material, the thermal conductivity was measured to evaluate the heat insulation performance, and the scattering rate was also measured to evaluate the powder falling suppression performance. The preparation conditions and evaluation results of the test materials are shown in Table 1 below.

(Measurement of Thermal Conductivity)

The thermal conductivity (W/m·K) was measured at room temperature (25°C). Note that, the thermal conductivity was measured by an unsteady hot wire method in accordance with ISO8894-1. Note that, those having a thermal conductivity of 0.05 or less were evaluated as a good heat insulation property. Those having a thermal conductivity of more than 0.05 were evaluated as a poor heat insulation property.

(Measurement of Scattering Rate)

Fig. 10 is a schematic diagram showing a method for measuring the scattering rate. As shown in Fig. 10, a device was used in which an arm 25 was attached so as to operate at an apex of a support pillar 24, and a test material 23 was attached to a tip of the arm 25. First, the test material 23 was attached to the tip of the arm 25, then the arm 25 was pulled up and fixed to any angle and thereafter released from the fixation and allowed to fall, thereby causing the support pillar 24 and the arm 25 to collide to apply an impact. Note that, the size of the test material 23 was 50 mm × 50 mm, the arm length was 915 mm, the impact was applied once, and the angle between the support pillar and the arm was 90°. Then, a scattering rate E (falling amount of inorganic particle) (mass %) was calculated according to the following equation, with a mass of the test material 23 before the impact being F0 (g) and a mass of the test material 23 after the impact being Fw (g).

$$\text{Scattering rate E} = (F0\text{-}Fw)/F0$$

In the above evaluation method, when the scattering rate E was 0.15 mass% or less, it was evaluated as good powder falling suppression performance.

[Table 1]

| No. | | Production condition | | | | Evaluation result | |
|---|---|---|---|---|---|---|---|
| | | Production method | Material | | | Heat insulation performance | Powder falling suppression performance |
| | | | Inorganic particle | | Binder fiber | Thermal conductivity (W/m-K) | Scattering rate (mass%) |
| Example | 1 | Dry method | Dry silica | Titania | Binder fiber having core-sheath structure | 0.02 | 0.12 |
| Comparative Example | 1 | Dry method | Dry silica | Titania | Single-component binder fiber | 0.03 | 0.31 |
| | 2 | Dry method | Wet silica | Titania | Single-component binder fiber | 0.07 | 0.35 |
| | 3 | Wet method | Wet silica | Titania | Single-component binder fiber | 0.07 | 0.29 |
| | 4 | Wet method | Dry silica | Titania | Binder fiber having core-sheath structure | 0.06 | 0.14 |

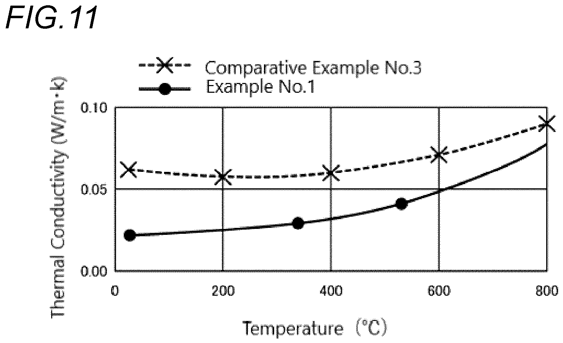

Fig. 11 is a graph showing a change in thermal conductivity in Comparative Example No. 3 and Example No. 1 at various temperatures. As shown in Table 1 and Fig. 11, in Example No. 1, since the test material of the heat transfer suppression sheet is prepared using a dry method, so that it is possible to obtain an excellent heat insulation property compared to Comparative Examples. In addition, since titania is used as the inorganic particle, an excellent heat insulation property can be obtained even in the temperature range of 300°C or higher Further, in Example No. 1, since the binder fiber having a core-sheath structure is contained as the material, the scattering rate E is 0.15 mass% or less, and a good powder falling suppression performance can be obtained.

In contrast, in Comparative Example Nos. 1 to 4, since the material used is a single-component binder fiber, or the test material is prepared by a wet method, the evaluation result for at least one of the heat insulation property and the powder falling suppression performance is poor.

[Test 2]

Next, in order to confirm structures of a test material in Comparative Example No. 5 produced by a production method outside the scope of the present invention and the test material in Example No. 1, photographs were taken using a scanning electron microscope (SEM).

Note that, the test material in Comparative Example No. 5 contains wet silica and a glass fiber and is produced by a wet method.

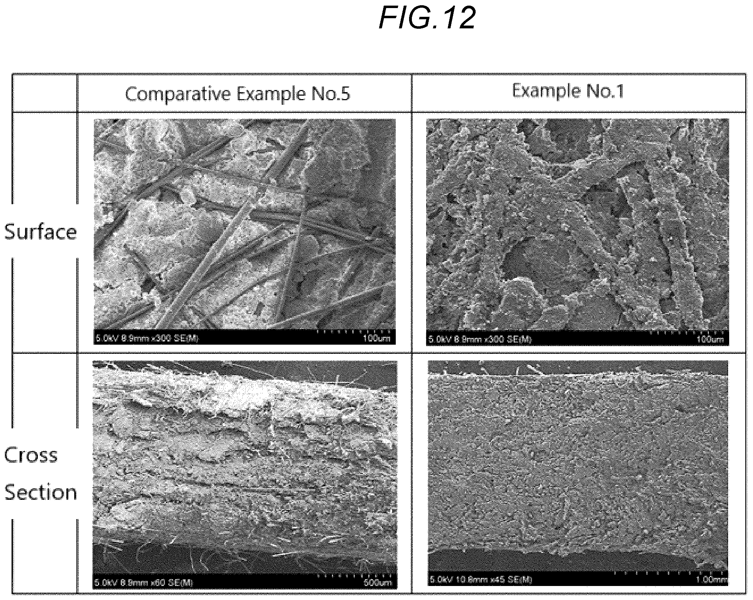

Fig. 12 shows a photograph substituted for a drawing showing a surface and a cross section of each of Comparative Example No. 5 and Example No. 1. As shown in Fig. 12, in Comparative Example No. 5, since the glass fiber is used, no inorganic particles are fused to the surface of the fiber, and there is no fusion of fibers to each other. In addition, since the test material is produced by a wet method, the inorganic particles are aggregated. In contrast, in Example No. 1, since a binder fiber having a core-sheath structure is used, the fusion portion containing the inorganic particle is formed on the outer peripheral surface of the organic fiber serving as the core portion, and a large-diameter fiber portion is obtained. In addition, in locations where a plurality of organic fibers are close to each other, since the plurality of organic fibers are fixed by the fusion portion, it can be observed that the large-diameter fiber portion forms a three-dimensional and strong framework.

[Test 3]

The powder falling suppression performances were compared in the cases of containing and not containing a hot melt powder.

<Preparation of Test Material>

(Example No. 2)

As the inorganic particle, dry silica and titania were prepared, and a binder fiber having a core-sheath structure was prepared. The specific content and name of each component are shown below.

·Inorganic particle: dry silica (60 mass%, average primary particle diameter: 0.012 $\mu$m)
·Inorganic particle: titania (25 mass%, average primary particle diameter: 8 $\mu$m)
·Binder fiber: PET/low melting point PET fiber (TJ04CN manufactured by TEIJIN FRONTIER CO., LTD., 15 mass%, average fiber length: 5 mm)
Core portion: polyethylene terephthalate (melting point: 240°C)
Sheath portion: low melting point polyethylene terephthalate (melting point: 110°C)

Thereafter, a test material in Example No. 2 having a basis weight of 740 (g/m$^2$) and a thickness of 2 mm was obtained by a dry method which is the same way as Example No. 1. Note that, the heating conditions were 150°C for 15 minutes.

(Example No. 3)

A material prepared by adding a hot melt powder to the material in Example No. 2 was prepared. The specific content and name of each component are shown below.

·Inorganic particle: dry silica (57.7 mass%, average primary particle diameter: 0.012 $\mu$m)
·Inorganic particle: titania (24.7 mass%, average primary particle diameter: 8 $\mu$m)
·Hot melt powder: powder resin (PR D60C-Z manufactured by TOKYO PRINTING INK MFG. CO., LTD., 2.6 mass%, melting point: 100°C)
·Binder fiber: PET/low melting point PET fiber (TJ04CN manufactured by TEIJIN FRONTIER CO., LTD., 15 mass%, average fiber length: 5 mm)
Core portion: polyethylene terephthalate (melting point: 240°C)
Sheath portion: low melting point polyethylene terephthalate (melting point: 110°C)

Thereafter, a test material in Example No. 3 having a basis weight of 740 (g/m$^2$) and a thickness of 2 mm was obtained by a dry method which is the same way as Example No. 1. Note that, the heating conditions were 150°C for 15 minutes.

<Evaluation on Test Material>

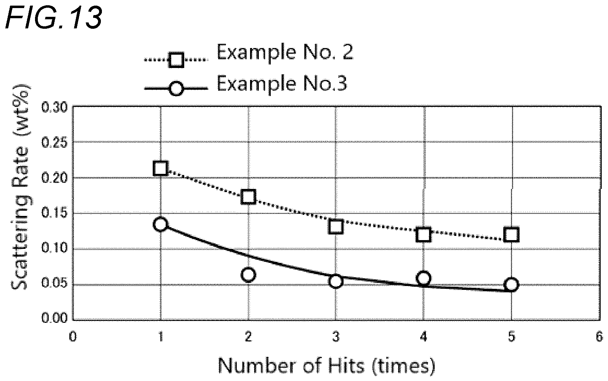

For each test material, the scattering rate was measured multiple times by the same method as the scattering rate measurement conducted in Test 1 above, and the powder falling suppression performances were compared. Fig. 13 is a graph showing a change in scattering rate with the number of hits, where a vertical axis is the scattering rate and a horizontal axis is the number of hits. As shown in Fig. 13, since in Example No. 3, a test material of a heat transfer suppression sheet is prepared using a material containing a hot melt powder, an excellent powder falling suppression performance can be obtained compared to Example No. 2 which does not contain a hot melt powder.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2022-038555) filed on March 11, 2022, and the contents thereof are incorporated herein by reference.

REFERENCE SIGNS LIST

1 core portion
2 sheath portion

3 binder fiber
4 inorganic particle
5 fusion portion
6 fiber portion
7 second organic material
8 base material portion
9 mixture
10, 13 heat transfer suppression sheet
12 crack
16 hardened portion
17 hardened layer
20a, 20b, 20c battery cell
30 battery case
100 battery pack

**Claims**

1. A method for producing a heat transfer suppression sheet comprising:

   a processing step of processing a mixture into a sheet by a dry method, the mixture containing an inorganic particle and a binder fiber having a core-sheath structure, wherein
   the binder fiber having a core-sheath structure includes a core portion extending in its longitudinal direction, and a sheath portion formed to cover an outer peripheral surface of the core portion, and
   a melting point of a first organic material constituting the core portion is higher than a melting point of a second organic material constituting the sheath portion.

2. The method for producing a heat transfer suppression sheet according to claim 1, wherein the melting point of the first organic material is 60°C or more higher than the melting point of the second organic material.

3. The method for producing a heat transfer suppression sheet according to claim 1 or 2, wherein the processing step includes a step of pressurizing the mixture and a step of heating the mixture.

4. The method for producing a heat transfer suppression sheet according to claim 3, wherein a heating temperature in the step of heating the mixture is a temperature higher than the melting point of the second organic material and lower than the melting point of the first organic material.

5. The method for producing a heat transfer suppression sheet according to any one of claims 1 to 4, wherein the inorganic particle includes at least one kind of particle selected from a dry silica particle and silica aerogel.

6. The method for producing a heat transfer suppression sheet according to claim 5, wherein the inorganic particle further includes at least one kind of particle selected from titania, zircon, zirconia, silicon carbide, zinc oxide, and alumina.

7. The method for producing a heat transfer suppression sheet according to any one of claims 1 to 6, wherein the mixture contains a hot melt powder.

8. A heat transfer suppression sheet comprising:

   an inorganic particle;
   an organic fiber constituted of a first organic material; and
   a fusion portion covering an outer peripheral surface of the organic fiber, wherein
   the fusion portion contains a second organic material and the inorganic particle, the second organic material having a melting point lower than a melting point of the first organic material.

9. The heat transfer suppression sheet according to claim 8, wherein the inorganic particle is a particle composed of at least one kind of inorganic material selected from an oxide particle, a carbide particle, a nitride particle, and an inorganic hydrate particle.

10. The heat transfer suppression sheet according to claim 9, wherein the inorganic particle includes at least one kind of particle selected from a dry silica particle and silica aerogel.

11. The heat transfer suppression sheet according to claim 10, wherein the inorganic particle further includes at least one kind of particle selected from titania, zircon, zirconia, silicon carbide, zinc oxide, and alumina.

12. The heat transfer suppression sheet according to any one of claims 8 to 11, wherein the melting point of the second organic material is 60°C or more lower than the melting point of the first organic material.

13. The heat transfer suppression sheet according to any one of claims 8 to 12, wherein

the first organic material is at least one kind selected from polyethylene terephthalate, a polypropylene, and nylon, and
the second organic material is at least one kind selected from polyethylene terephthalate, a polyethylene, a polypropylene, and nylon.

14. A battery pack comprising:

a plurality of battery cells; and
the heat transfer suppression sheet according to any one of claims 8 to 13, wherein
the plurality of battery cells is connected in series or in parallel.

FIG.1

*FIG.2*

*FIG.3*

*FIG.4*

5.0kV 8.9mm x300 SE(M)                    100um

*FIG.5*

*FIG.6*

10.0kV 8.7mm x500 SE(M)                    100um

## FIG.7

FIG.8

*FIG.9*

*FIG.10*

FIG.11

FIG.12

| | Comparative Example No.5 | Example No.1 |
|---|---|---|
| Surface | | |
| Cross Section | | |

*FIG.13*

······□······ Example No. 2
───○─── Example No.3

## INTERNATIONAL SEARCH REPORT

| International application No. |
|---|
| **PCT/JP2023/009465** |

### A. CLASSIFICATION OF SUBJECT MATTER

*H01M 10/658*(2014.01)i; *H01M 10/625*(2014.01)i
FI:   H01M10/658; H01M10/625

According to International Patent Classification (IPC) or to both national classification and IPC

### B. FIELDS SEARCHED

Minimum documentation searched (classification system followed by classification symbols)

H01M10/658; H01M10/625

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)



### C. DOCUMENTS CONSIDERED TO BE RELEVANT

| Category* | Citation of document, with indication, where appropriate, of the relevant passages | Relevant to claim No. |
|---|---|---|
| Y | WO 2022/009852 A1 (IBIDEN CO LTD) 13 January 2022 (2022-01-13) <br> paragraphs [0034]-[0078], fig. 1-3 | 1-14 |
| Y | JP 2020-165065 A (OJI HOLDINGS CORP) 08 October 2020 (2020-10-08) <br> paragraphs [0014]-[0047], fig. 1 | 1-14 |
| Y | JP 2021-502529 A (3M INNOVATIVE PROPERTIES COMPANY) 28 January 2021 (2021-01-28) <br> paragraphs [0016]-[0040], fig. 1-2 | 1-14 |
| Y | CN 111440557 A (SHANGHAI GAOGUANDA MATERIAL TECHNOLOGY CO., LTD.) 24 July 2020 (2020-07-24) <br> paragraph [0020], fig. 1 | 7 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 May 2023** | **30 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/009465**

| Patent document cited in search report | | | Publication date (day/month/year) | Patent family member(s) | | | Publication date (day/month/year) |
|---|---|---|---|---|---|---|---|
| WO | 2022/009852 | A1 | 13 January 2022 | KR | 10-2022-0025198 | A | |
| | | | | CN | 114258388 | A | |
| JP | 2020-165065 | A | 08 October 2020 | (Family: none) | | | |
| JP | 2021-502529 | A | 28 January 2021 | US 2020/0263336 A1 paragraphs [0027]-[0051], fig. 1-2 | | | |
| | | | | CN | 109768346 | A | |
| CN | 111440557 | A | 24 July 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021034278 A

- JP 2022038555 A